# EUROPÄISCHE PATENTSCHRIFT

(11) **EP 3 108 780 B1**
(45) Veröffentlichungstag und Bekanntmachung des Hinweises auf die Patenterteilung: **15.05.2019**
(21) Anmeldenummer: 16175611.9
(22) Anmeldetag: 22.06.2016
(51) Int. Cl.: A47J 37/07

(54) **VORRICHTUNG ZUM GAREN VON LEBENSMITTELN**
DEVICE FOR COOKING FOOD
DISPOSITIF DE CUISSON D'ALIMENTS

(30) Priorität: 22.06.2015 DE 102015109982
(43) Veröffentlichungstag der Anmeldung: 28.12.2016
(73) Patentinhaber: Neussel, Jürgen, 35088 Battenberg (DE)
(72) Erfinder: Neussel, Jürgen, 35088 Battenberg (DE)
(74) Vertreter: Sprenger, Gerrit Lars Eike

(56) Entgegenhaltungen:
- EP-A1- 2 581 003
- FR-A1- 2 680 960
- US-A- 3 583 385
- Anonymous: "Yagoona design blog: The Ringryll - the social barbecue", , 16. August 2012 (2012-08-16), XP055294561, Gefunden im Internet: URL:http://yagoona-design.blogspot.de/2012 /08/the-ringryll-social-barbecue.html [gefunden am 2016-08-09]

## Beschreibung

Die Erfindung betrifft eine Vorrichtung zum Garen von Lebensmitteln nach dem Oberbegriff des Patentanspruchs 1.

Derartige Vorrichtungen zum Garen von Lebensmittel finden sowohl im professionellen Bereich als auch im Privatbereich vielfältig Verwendung. Im Regelfall handelt es sich dabei um Grillvorrichtungen, in deren Feuerungswanne Verbrennungsmaterial verbrannt und durch die dabei erzeugte Hitze eine Heizfläche einer Heizplatte der Vorrichtung erhitzt wird. Auf der Heizplatte wird nachfolgend das Grillgut gegart. Als Verbrennungsmaterial wird dabei regelmäßig Holz oder Holzkohle verwendet.

Eine ähnliche Vorrichtung zum Garen von Lebensmitteln ist beispielsweise aus der EP 2 143 362 B1 bekannt. Die dortige Vorrichtung zum Garen von Lebensmitteln weist dabei eine Feuerungswanne in Form einer geschnittenen Ellipsoidschale und eine mit einer Heizfläche aufweisende Heizplatte auf. Die dortige Heizplatte ist dabei bündig mit dem Rand der Feuerungswanne verschweißt, sodass die Heizplatte über den gesamten Umfang des Randes der Feuerungswanne mit dieser stoffschlüssig verbunden ist. Die Heizplatte mit ihrer Heizfläche ist bei dieser Vorrichtung in Form eines Kreisrings ausgebildet.

Durch diese spezielle Ausbildung der Heizplatte und der stoffschlüssigen Verbindung der Heizplatte mit dem Rand der Feuerungsschale ist die Öffnung dieses Kreisringes auch die einzige Möglichkeit, der Feuerungswanne Luft beziehungsweise Sauerstoff zuzuführen, welche aber für das Verbrennen des Brandgutes in der Feuerungsschale unablässig ist. Hierdurch entstehen beim Betrieb dieser Vorrichtung im Bereich der Öffnung der als Kreisring ausgebildeten Heizplatte Turbulenzen, da zum einen die durch das Verbrennen des Brandguts entstehende Hitze durch diese Öffnung nach oben entweichen und zum anderen die Luft bzw. der Sauerstoff durch diese Öffnung zu dem Brandgut in der Feuerungsschale gelangen muss.

Durch Ausbildung dieser Turbulenzen wird die Heizplatte zumindest im angrenzenden Bereich zur Öffnung des Kreisrings ungleichmäßig erhitzt, sodass dort kein gleichmäßiges garen von Lebensmitteln möglich ist. Weiterhin wird durch diese Turbulenzen der Abbrand des Verbrennungsmaterials negativ beeinflusst, was sich auch in schlechten Rauchwerten beim Verbrennen des Verbrennungsmaterials zeigt.

Zwar wird bei dieser bekannten Vorrichtung auf ihrer Heizplatte beziehungsweise Heizfläche auch ein Temperaturgefälle von innen nach außen erzeugt, wodurch auf der Heizplatte unterschiedliche Temperaturzonen auf der Heizfläche realisiert werden sollen. Allerdings hat sich gezeigt, dass durch die spezielle Ausgestaltung dieser Vorrichtung dieses Temperaturgefälle nur sehr gering ist, da sich die Hitze unterhalb der Heizplatte staut und diese beziehungsweise die Heizfläche doch annähernd gleichmäßig aufgeheizt wird.

Weiterhin ist aus dem Internetauftritt der Yagoona AG unter http://yagoona-design.Blogspot.de/2012/08/the-ringryll-social-barbecue.html eine entsprechende Vorrichtung zum Garen von Lebensmitteln bekannt, die eine vierteilige Heizplatte aufweist, deren vier Teile mit einer aufwendigen Unterkonstruktion über der Feuerungswanne angeordnet werden.

Aus der FR 2 680 960 A1 ist eine Vorrichtung zum Garen von Lebensmitteln nach dem Oberbegriff des Patentanspruchs 1 bekannt, bei der eine Heizplatte über dem Rand der Feuerungswanne unbefestigt aufgelegt ist, wobei zwischen der Heizplatte und dem Rand der Feuerungswanne ein Luft- beziehungsweise Gasdurchtritt möglich ist. Durch diese Maßnahme wird das aus der EP 2 143 362 B1 bekannte Hitzestauproblem zwar vermieden. Allerdings besteht dabei für die Benutzer immer noch die Gefahr von Verbrennungen, wenn sie der Vorrichtung zu nahe und dann in direkten Kontakt mit der Feuerungswanne kommen.

Es ist daher Aufgabe der Erfindung, eine Vorrichtung zum Garen von Lebensmitteln nach dem Oberbegriff des Patentanspruchs 1 derart weiterzubilden, dass die Gefahr von Verbrennungen der Benutzer der Vorrichtung minimiert wird.

Gelöst wird diese Aufgabe durch eine Vorrichtung zum Garen von Lebensmitteln mit allen Merkmalen des Patentanspruchs 1. Vorteilhafte Ausgestaltungen der Erfindung finden sich in den Unteransprüchen.

Die erfindungsgemäße Vorrichtung zum Garen von Lebensmitteln weist dabei eine Feuerungswanne auf, welche eine nach oben weisende und durch einen Rand begrenzte Öffnung besitzt. Ferner weist diese Vorrichtung eine über dem Rand der Feuerungswanne angeordnete, eine Heizfläche aufweisende Heizplatte auf, auf deren Heizfläche Lebensmittel unmittelbar gegart werden können, wobei diese Heizfläche mit einer Öffnung versehen ist. Dabei ist es vorgesehen, dass die Heizplatte einstückig ausgebildet ist und über dem Rand der Feuerungswanne unbefestigt aufgelegt ist, wobei zwischen der Heizplatte und dem Rand der Feuerungswanne ein Luft- bzw. Gasdurchtritt möglich ist. Erfindungsgemäß ist nunmehr ein Abstandselement vorgesehen, das die Feuerungswanne im Bereich ihres Randes in einem Abstand kontinuierlich vollständig umläuft.

Durch dieses Abstandselement ist in vorteilhafter Weise gewährleistet, dass beim Betrieb der erfindungsgemäßen Vorrichtung dieses Abstandselement als Schutzelement dient, welches den Anwender auf Abstand zu der durch das Verbrennungsmaterial aufgeheizten Feuerungsschale und der Heizplatte hält. Hierdurch sind für den Anwender in wirkungsvoller Weise die Risiken von Verbrennungen minimiert. Alternativ kann natürlich auch vorgesehen sein, ein derartiges Abstandselement aus einem Material mit schlechterer Wärmeleitfähigkeit als das bei der Feuerungswanne und der Heizplatte verwendete Metall auszustatten. Hierbei könnte sich auch in dekorativer Art und Weise Holz oder Kunststoff anbieten.

Im Rahmen der Erfindung soll dabei unter dem Begriff "Garen" die Zubereitung von Lebensmitteln unter Hitzezufuhr verstanden werden, worunter insbesondere auch ein Braten, ein Dämpfen oder auch ein Grillen zu verstehen sein soll. In die Feuerungswanne wird zum Betrieb der Vorrichtung Verbrennungsmaterial, insbesondere Holz oder Holzkohle, eingefüllt und entfacht. Dabei wird der zur Verbrennung notwendige Sauerstoff erfindungsgemäß nicht ausschließlich über die Öffnung in der Heizplatte zum Verbrennungsmaterial gelangen. Vielmehr wird der für die Verbrennung wesentliche Sauerstoffanteil für die Verbrennung des Verbrennungsmaterials innerhalb der Feuerungswanne durch den Gas- beziehungsweise Luftdurchtritt zwischen der Heizplatte und dem Rand der Feuerungswanne ins Innere der Feuerungswanne gefördert. Da nunmehr der Sauerstoff, der über die Öffnung in der Heizplatte zu dem Verbrennungsmaterial gelangt, nur noch marginal zu der Verbrennung des Verbrennungsmaterials in der Feuerungswanne beiträgt, ist dadurch ein verbesserter Abbrand des Verbrennungsmaterials innerhalb der Feuerungswanne ermöglicht, woraus zudem verbesserte Rauchwerte beim Verbrennen des Verbrennungsmaterials und somit beim Garen der Lebensmittel resultieren.

Zusätzlich zu der verbesserten und effektiveren Verbrennung des Verbrennungsmaterials mit deutlich verbesserten Rauchwerten ergibt sich bei der erfindungsgemäßen Vorrichtung zum Garen von Lebensmitteln ein zusätzlicher Vorteil durch die zusätzliche Luftzufuhr zwischen der Heizplatte und dem Rand der Feuerungswanne. Hierdurch entsteht nämlich durch den zwischen der Heizplatte und dem Rand der Feuerungswanne erfolgende Luftdurchtritt eine Kühlung der Heizplatte beziehungsweise Heizfläche in deren Außenbereich, sodass auf der Heizfläche ein Temperaturgradient entsteht, der zur Folge hat, dass die Heizfläche weiter innen eine höhere Temperatur aufweist als in ihrem Außenbereich in der Nähe des Randes der Feuerungswanne. Hierdurch werden auf der Heizplatte beziehungsweise Heizfläche unterschiedliche Temperaturzonen verwirklicht, durch die es möglich ist, dass Lebensmittel im inneren Bereich der Heizfläche in der Nähe der Öffnung der Heizplatte gegart werden können, während die Heizfläche im äußeren Bereich der Heizfläche in der Nähe des Randes der Feuerungswanne dazu genutzt werden kann, bereits gegarte Lebensmittel warm zu halten. Insbesondere ist es auch möglich, dass von diesem Bereich, in dem die gegarten Lebensmittel warm gehalten werden können. Auch ist es dadurch möglich, dass die gegarten Lebensmittel von dort direkt von dem Benutzer verspeist werden können, da sie nicht mehr auf das notwendige, Verbrennungen vermeidende Maß abgekühlt werden müssen. Dies hat zur Folge, dass auf Geschirr, auf welches die gegarten Lebensmittel zum weiteren Verzehr aufgelegt werden müssten, auch verzichtet werden kann, und man in geselliger Runde direkt von der erfindungsgemäßen Vorrichtung speisen kann.

Vorteilhafterweise ist dabei die Heizfläche der Heizplatte im Wesentlichen rechtwinklig zu einer Mittellängsachse der Feuerungswanne ausgerichtet. Durch die Öffnung in der Heizplatte und durch die Luftzufuhr zwischen der Heizplatte und dem Rand der Feuerungswanne wird gewährleistet, dass das in der Feuerungswanne brennende Verbrennungsmaterial optimal verbrennen kann, wobei insbesondere deutlich verbesserte Rauchwerte im Vergleich mit den aus dem Stand der Technik bekannten Vorrichtungen auftreten. Da bei der erfindungsgemäßen Vorrichtung die Lebensmittel auf der Heizfläche der Heizplatte gegart werden und somit nicht unmittelbar über einer offenen Flamme-wie dies beim Grillen über einem Grillrost der Fall ist - wird die Gefahr des Verkohlens selbst bei hohen Gartemperaturen stark vermindert. Gleichzeitig wird aber auch durch die Verwendung von Holz oder Holzkohle als Verbrennungsmaterial das sich bei üblichen Grillgeräten ergebende Holz- beziehungsweise Holzkohlearoma auch bei der vorliegenden Erfindung erhalten.

Dadurch dass die Heizplatte nicht fest mit der Feuerungswanne verbunden ist, treten während des Betriebs der erfindungsgemäßen Vorrichtungen auch keine thermischen Spannungen zwischen Feuerungswanne und Heizplatte auf, die zu Rissen sowohl in der Heizplatte als auch in der Feuerungswanne führen könnten.

Im Sinne der Erfindung soll bei der im Wesentlichen rechtwinkligen Anordnung der Heizfläche zu einer Mittellängsachse der Feuerungswanne auch verstanden werden, dass die Heizfläche zu der Öffnung der Heizplatte nach innen geneigt ist, Diese Neigung ist nur minimal und liegt im Bereich von 1° bis 5° und dient dazu, dass beim Garen entstehendes flüssiges Fett oder andere Flüssigkeiten in die Feuerungswanne läuft. Hierdurch ist beispielsweise auch wirkungsvoll vermieden, dass derartige Flüssigkeiten auf die Standfläche der erfindungsgemäßen Vorrichtung tropfen und diese dadurch verschmutzen. Durch eine derartige minimale Neigung der Heizplatte nach innen ist zudem gewährleistet, dass die beim direkten Garen beziehungsweise Grillen von Lebensmittels auf der Heizplatte aus den Lebensmittel austretenden Flüssigkeiten, wie beispielsweise Fette oder dergleichen, in die Feuerungswanne abfließen können und dort dann verbrennen. Die durch das Abbrennen dieser Flüssigkeiten entstehenden Gase beziehungsweise Rauchgase können dann durch die Öffnung in der Heizplatte entweichen, ohne wieder in direkten Kontakt mit den auf der Heizplatte aufliegenden Lebensmitteln zu kommen. Hierdurch wird das auf der Heizplatte garende beziehungsweise grillende Lebensmittel auch deutlich gesundheitsschonender gegart, da derartige Gase beziehungsweise Rauchgase, die beim normalen Grillen wieder in Kontakt mit dem Grillgut kommen, gesundheitsschädlich sind und zum Teil auch unter Verdacht stehen, krebserregend zu sein.

Nach einer ersten vorteilhaften Ausgestaltung der Erfindung ist die Feuerungswanne in Form einer geschnittenen Kugel- oder Ellipsoidschale beziehungsweise in Form eines geschnittenen Hohlquaders ausgebildet. Sofern dabei die Feuerungswanne als Kugel- oder Ellipsoidschale ausgebildet ist, hat es sich als vorteilhaft erwiesen, dass diese oberhalb ihres Äquators geschnitten ist, wodurch der Rand der Feuerungswanne oberhalb dieses Äquators liegt. Hierdurch ist eine sehr gute Wärmeverteilung innerhalb der Feuerungswanne gewährleistet. Weiterhin ist durch eine derartige Ausgestaltung auch ein optisch äußerst ansprechendes Design gegeben.

Nach einer weiteren Ausgestaltung der Erfindung ist die Öffnung der Heizplatte in Form einer Kreisfläche, einer Ellipsenfläche oder eines Mehrecks, insbesondere eines Vierecks ausgebildet. Hierbei bietet es sich an, diese Öffnung derart auszugestalten, dass sie im Wesentlichen ähnlich beziehungsweise kongruent zu der Öffnung der Feuerungswanne ausgebildet ist. Hierdurch ergibt sich neben den bereits zuvor beschriebenen guten Bedingungen für das Verbrennen des Verbrennungsmaterials innerhalb der Feuerungswanne ebenfalls auch ein sehr ansprechendes Design.

Nach einem besonders vorteilhaften Gedanken der Erfindung bestehen die Feuerungswanne und/oder die Heizplatte aus einem Metall, insbesondere aus Stahl und besonders bevorzugt aus Edelstahl. Die gesamte Vorrichtung hat dabei, sofern es sich um eine Kugel- oder Ellipsoidschale handelt, einen Außenradius R, der bevorzugt im Bereich von 0,5 bis 2,5 m liegt. Sofern die Feuerungswanne in Form eines geschnittenen Hohlquaders ausgebildet ist, weist dieser vorzugsweise eine Kantenlänge von ebenfalls dieser Größe auf. Die Öffnung innerhalb der Heizplatte ist dabei derart ausgelegt, dass, sofern die Heizplatte als Kreisring ausgebildet ist, das Verhältnis von Außenradius R zum Innenradius r des Außenringes im Bereich von 1,5:1 bis 5:1 liegt. Die gleichen Verhältnisse gelten auch für die Kantenlängen der Öffnung der Heizplatte und der Feuerungswanne, sofern diese viereckig ausgebildet sind. In einer bevorzugten Ausführungsform hat dabei das Metall eine Wandstärke von 10 mm und mehr, wodurch sichergestellt ist, dass die gesamte Vorrichtung während ihres Betriebes auch bei gegebenenfalls sehr hohen Temperatur formstabil bleibt und keine thermische Spannungen innerhalb der Heizplatte oder Feuerungswanne auftreten, die Rissbildungen in diesen Einzelteilen zur Folge haben könnten. Dadurch dass, wie bereits weiter oben erwähnt, die Heizplatte nur unbefestigt auf dem Rand der Feuerungswanne aufliegt, ist zwischen diesen beiden Einzelteilen auch eine Bewegung möglich, sodass zwischen ihnen beim Betrieb der Vorrichtung keine thermischen Spannungen auftreten.

Durch die Verwendung von Metall, Stahl oder Edelstahl ist es möglich, die Heizplatte in einfacher Weise auf dem Rand der Feuerungswanne abzulegen. Durch das hohe Gewicht dieser Materialien ist ein sicherer Halt der Heizplatte auf der Feuerungswanne gegeben, ohne dass diese gesondert befestigt werden muss. Alternativ kann natürlich vorgesehen sein, dass punktuell um den Umfang der Feuerungswanne Verbindungselemente vorgesehen sind, mit welchen die Heizplatte mit der Feuerungswanne verbunden werden kann. Allerdings kann auch vorgesehen sein, dass der Rand der Feuerungswanne und die Heizplatte selbst Elemente aufweisen, die derart ineinandergreifen, dass ein Verschieben der Heizplatte auf der Feuerungswanne verhindert ist.

Auch ist insbesondere bei Verwendung von geschmiedetem Metall, insbesondere Stahl gewährleistet, dass ein Luftdurchtritt zwischen der Heizplatte und dem Rand der Feuerungswanne ins Innere der Feuerungswanne möglich ist. Durch Verwendung einer geschmiedeten Feuerungswanne ist insbesondere deren Rand auch nicht derart eben ausgebildet, dass dadurch eine nahezu luft- beziehungsweise gasdichte Auflage der Heizplatte auf dem Rand der Feuerungswanne ermöglicht ist. Vielmehr sind dabei auch deutliche sichtbare Luft- beziehungsweise Gasdurchtrittsöffnungen zwischen der Feuerungswanne und der Heizplatte gegeben. Derartige Luftbeziehungsweise Gasdurchtrittsöffnungen können dabei auch gezielt während des Schmiedens der Feuerungswanne realisiert werden. Durch derartige Durchtrittsöffnungen ist allerdings nicht nur ein Luft- beziehungsweise Gasdurchtritt möglich, vielmehr wird während des Betriebs der erfindungsgemäßen Vorrichtung durch diese Öffnungen die Umgebung derselben durch den dadurch heraustretenden Feuerschein beleuchtet.

Nach einem weiteren vorteilhaften Gedanken der Erfindung weist das Abstandselement bevorzugt einen kreisförmigen Querschnitt auf und ist besonders bevorzugt aus einem Metall, insbesondere aus Stahl und besonders bevorzugt aus Edelstahl gebildet.

Dabei sind an dem Abstandselement vorteilhafterweise wenigstens drei Auflageelemente angeordnet, die auf dem Rand der Feuerungswanne ablesbar sind, wobei die Auflageelemente bevorzugt Aufnahmen aufweisen, mit denen sie in den Rand der Feuerungswanne eingreifen und das Abstandselement gegenüber der Feuerungswanne fixieren. Hierdurch ist gewährleistet, dass das Abstandselement über seinen gesamten Umfang den gleichen Abstand zur Feuerungswanne aufweist, sodass dies nicht nur der Verminderung des Verletzungsrisikos durch Verbrennungen dient, sondern auch ästhetischen Gesichtspunkten im Hinblick auf ein reizvolles Design Rechnung trägt.

Während des Betriebs der erfindungsgemäßen Vorrichtung wird dieses Abstandselement durch die zuvor beschriebenen Öffnungen zwischen Heizplatte und Feuerungswanne nicht nur die Umgebung der Vorrichtung durch den dadurch heraustretenden Feuerschein beleuchtet. Vielmehr ergibt sich dadurch auch eine sehr ästhetische Beleuchtung für dieses Abstandselement.

Dabei kann auch vorgesehen sein, dass diese wenigstens drei Auflageelemente eine deutlich geringere Wärmeleitfähigkeit als die Feuerungswanne und die Heizplatte aufweisen. Hierdurch ist gewährleistet, dass sich das Abstandselement nicht unnötig aufheizt. Auch hierdurch wird Verbrennungen wirkungsvoll vorgebeugt.

Dabei hat es sich weiterhin als vorteilhaft erwiesen, dass die Heizplatte auf den Auflageelementen des Abstandselements und der Bildung eines Spaltes zwischen der Heizplatte und dem Rand der Feuerungswanne ablegbar ist. Durch Bildung eines derartigen Spaltes ist die Luftbeziehungsweise Gaszufuhr zwischen Rand der Feuerungswanne und Heizplatte sehr genau definierbar, sodass dadurch der Abbrand des Verbrennungsmaterials innerhalb der Feuerungswanne deutlich verbessert ist, wobei natürlich auch die Rauchwerte beim Verbrennen des Verbrennungsmaterials deutlich verbessert sind.

In einer besonders vorteilhaften Ausgestaltung der Erfindung ist dabei vorgesehen, dass in dem Spalt zwischen der Heizplatte und dem Rand der Feuerungswanne Regulierungselemente vorgesehen sind, mit welchen der Luft- beziehungsweise Gasdurchtritt durch den Spalt regulierbar ist. Hierdurch können die Verbrennung des Verbrennungsmaterials und somit auch die Rauchwerte in gewünschter Weise während des Betriebs der erfindungsgemäßen Vorrichtung eingestellt und auch variiert werden. Dies ist insbesondere dann von Vorteil, wenn als Verbrennungsmaterial ein bestimmtes Holz beziehungsweise ein Verbrennungszusatz verwendet wird, dessen Aroma sich durch seine Rauchentwicklung auf die zu garenden Lebensmittel übertragen soll.

In die gleiche Richtung zielt die Ausgestaltung der Erfindung, wonach Verstellelemente vorgesehen sind, durch welche die Größe des Spaltes zwischen der Heizplatte und dem Rand der Feuerungswanne in seiner Dimension beziehungsweise Größe einstellbar ist. Auch durch eine derartige Maßnahme kann der Luft- beziehungsweise Gasdurchtritt durch den Spalt reguliert werden, sodass auch hierdurch die Verbrennung des Verbrennungsmaterials und somit auch die Rauchwerte in gewünschter Weise während des Betriebs der erfindungsgemäßen Vorrichtung eingestellt und auch variiert werden können.

Besonders vorteilhaft ist es dabei, wenn die Verstellelemente als Drehelemente ausgebildet sind, die zumindest an drei Auflageelementen des Abstandselementes angreifen und die vorteilhafterweise den gleichen Winkelabstand zu benachbarten Verstellelementen aufweisen. Durch derartige wenigstens drei Drehelemente kann die Größe des Spaltes in einfacher Weise mithilfe eines einfachen Werkzeuges, das an den Drehelementen angreifen kann, in seiner Größe beziehungsweise Dimension variiert werden.

In einer besonders vorteilhaften Ausgestaltung der Erfindung ist dabei vorgesehen, dass diese Drehelemente als Exzenterscheiben ausgebildet sind, welche auf jeweils einem Bolzen drehbar gelagert sind. Vorzugsweise greifen diese Bolzen im Inneren der Feuerungswanne in Schlitze der als Laschen ausgebildeten Aufnahmen ein. Durch diese Ausgestaltung der Erfindung ist gewährleistet, dass beim Verdrehen der Verstellelemente beziehungsweise der als Exzenterscheiben ausgebildeten Drehelemente die auf den Auflageelementen aufliegende Heizfläche auf der Feuerungswanne nicht auch verdreht wird, sondern nur die Größe des Spaltes zwischen Heizplatte und Rand der Feuerungswanne variierbar ist.

Damit die Größe des Spaltes auch sicher einstellbar ist, ist es vorgesehen, dass die Verstellelemente in wenigstens zwei Stellungen arretierbar sind. Hierdurch wird sichergestellt, dass alle Verstellelemente durch diese wenigstens zwei arretierbaren Stellungen eine konstante Größe des Spaltes zwischen Rand der Feuerungswanne und der Heizplatte vorgeben, sodass auch hierdurch die Verbrennung des Verbrennungsmaterials und somit auch die Rauchwerte in gewünschter Weise während des Betriebs der erfindungsgemäßen Vorstellung eingestellt werden können.

Wenn die Verstellelemente dabei als Exzenterscheiben ausgebildet sind, hat es sich weiterhin als vorteilhaft erwiesen, zur Arretierung in wenigstens zwei Stellungen auf dem Außenumfang der Exzenterscheiben wenigstens eine Abflachung vorzusehen. Durch diese eine Abflachung ist in einfacher Art und Weise eine arretierbare Stellung gegeben, da das Auflageelement des Abstandselementes sicher darauf abgelegt werden kann. Die zweite arretierbare Stellung ist durch den minimalen Abstand des Drehpunktes der Exzenterscheibe zu dem Außenumfang derselben gegeben.

Damit als Drehelemente ausgebildete Verstellelemente in einfacher Weise verdreht werden können, ist es vorgesehen, dass diese Verdrehelemente mit einem Angriffselement für ein Werkzeug versehen sind. In einfacher Weise kann dies ein Sechskant sein, der mit einem normalen Verdrehwerkzeug, wie beispielsweise ein Sechskantschlüssel beziehungsweise einer Ratsche mit entsprechender Nuss oder dergleichen verstellt werden kann.

Damit sich in der Feuerungswanne sammelnde Feuchtigkeit, die auftreten kann, wenn die Vorrichtung nicht im Betrieb ist, auch ablaufen kann, ist es vorgesehen, im tiefsten Punkt der Feuerungswanne eine Öffnung anzuordnen. Durch diese Öffnung kann die innerhalb der Feuerungswanne sich sammelnde Feuchtigkeit in einfacher Weise nach außen ablaufen.

Dabei kann es sich als vorteilhaft erweisen, dass die gesamte Vorrichtung zum Garen von Lebensmitteln ein Standelement aufweist, auf dem die Feuerungswanne aufsetzbar ist. Hierdurch ist noch mal die Ablaufmöglichkeit von sich in der Feuerungswanne sammelnden Flüssigkeit verbessert, da die Öffnung in der Feuerungswanne zum Ablauf der Flüssigkeit dann nicht direkt auf dem Boden aufliegt.

Ein derartiges Standelement kann dabei aus einem oder mehreren Ringscheiben gebildet sein, die zudem gegebenenfalls mit Schlitzen versehen sein können, um den Flüssigkeitsablauf nochmals zu verbessen. Auch können nicht nur Ringscheiben zum Einsatz kommen. Vielmehr ist es auch möglich halbe oder viertel Ringescheiben zu verwenden, durch die zusätzlich ein Höhenausgleich in Folge eines unebenen Bodens ausgeglichen werden kann. Vorzugsweise werden dabei Ringscheiden einer Stärke von 12 mm oder mehr verwendet.

Weiterhin kann an dem Standelement auch eine Rollenkonstruktion angeordnet sein, sodass die gesamte Vorrichtung auf einem festen und im Wesentlichen ebenen Untergrund in einfacher Weise verschoben werden kann. Das Verschieben kann dabei an dem Abstandselement erfolgen, da dieses auf der Feuerungswanne mittels der als Laschen ausgebildeten Aufnahmeelemente fixiert ist. Um eine derartige Rollenkonstruktion optisch zu verbergen, hat es sich zudem als vorteilhaft erwiesen, wenn sie im Inneren des Standelementes angeordnet und von außen nicht sichtbar ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Figur 1:: eine Feuerungswanne eines ersten Ausführungsbeispiels einer erfindungsgemäßen Vorrichtung zum Garen von Lebensmitteln in einer Seitenansicht,
- Figur 2:: die Vorrichtung gemäß Figur 1 in einer Ansicht von oben,
- Figur 3:: die Vorrichtung gemäß Figur 1 in einer Schnittdarstellung,
- Figur 4:: das Ausführungsbeispiel einer erfindungsgemäßen Vorrichtung zum Garen von Lebensmitteln in einer Seitenansicht der Figur 1 mit einem Abstandselement,
- Figur 5:: die Vorrichtung gemäß Figur 4 in einer Ansicht von oben,
- Figur 6:: die Vorrichtung gemäß Figur 4 in einer Schnittdarstellung,
- Figur 7:: eine perspektivische Darstellung einer Feuerungswanne eines zweiten Ausführungsbeispiels einer erfindungsgemäßen Vorrichtung zum Garen von Lebensmitteln,
- Figur 8:: eine perspektivische Darstellung des zweiten Ausführungsbeispiels einer erfindungsgemäßen Vorrichtung zum Garen von Lebensmitteln,
- Figur 9:: eine Schnittdarstellung eines Ausführungsbeispiels einer erfindungsgemäßen Vorrichtung zum Garen von Lebensmitteln im Bereich einer Verstelleinrichtung,
- Figur 10:: der Bereich der in Figur 9 dargestellten Vorrichtung zum Garen von Lebensmitteln in einer Ansicht von außerhalb der Feuerungswanne,
- Figur 11:: der Bereich der in den Figuren 9 und 10 dargestellten Vorrichtung zum Garen von Lebensmitteln in einer Ansicht von oben und
- Figur 12:: der in den Figuren 9 bis 11 dargestellte Bereich einer Vorrichtung zum Garen von Lebensmitteln in einer Ansicht von innerhalb der Feuerungswanne.

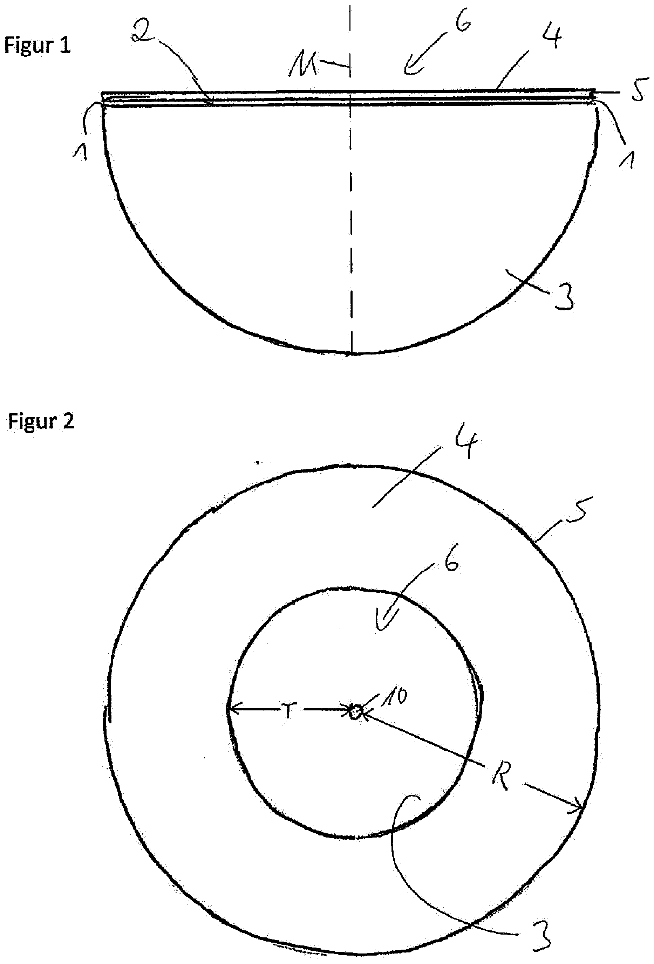

In der Figur 1 ist eine Seitenansicht einer halbkugelförmigen Feuerungswanne 3 eines ersten Ausführungsbeispiels einer erfindungsgemäßen Vorrichtung zum Garen von Lebensmitteln dargestellt. Diese halbkugelförmige Feuerungswanne besitzt dabei einen umlaufenden Rand 1, auf dem eine kreisringförmige Heizplatte 5 unbefestigt aufgelegt ist. Durch die Heizplatte 5 wird dabei eine Öffnung 2 der Feuerungswanne 3 zu deren Inneren abgedeckt. Die kreisringförmige Heizplatte 5 weist dabei selbsteine Öffnung 6 zum Inneren der Feuerungswanne hinauf, aus der während des Betriebs der Vorrichtung Hitze und während des Verbrennen s des Verbrennungsmaterials entstehende Gase und Rauch entweichen kann.

Wie insbesondere der Figur 2 zu entnehmen ist, besitzt die kreisringförmige Heizplatte 5 einen Innenradius r und einen Außenradius R, wobei der Außenradius R auch dem Radius der Halbkugel der Feuerungswanne 3 entspricht.

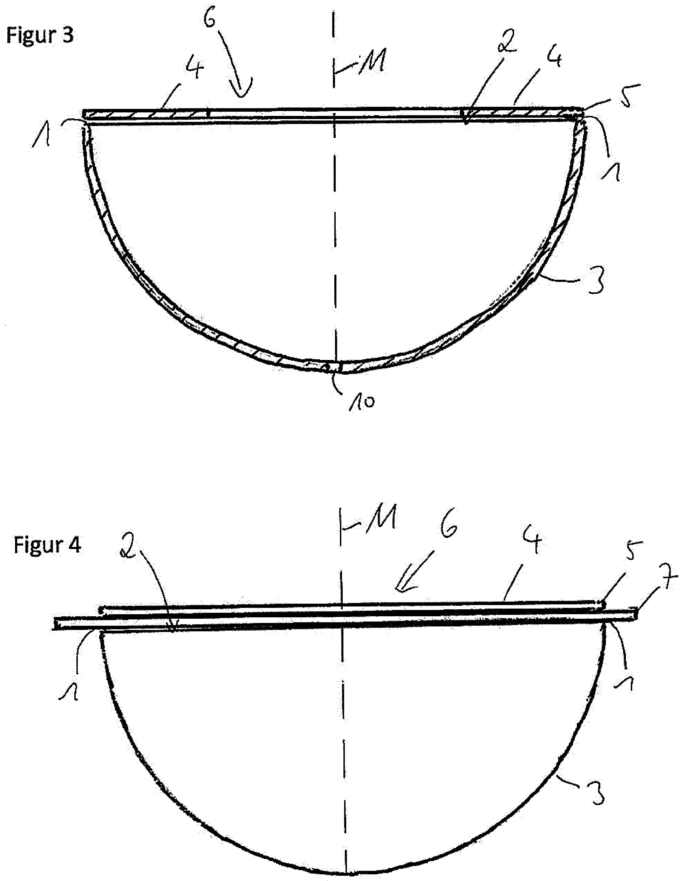

Aus der Seitenansicht gemäß Figur 1 und der Schnittdarstellung gemäß Figur 3 ist erkenntlich, dass die gesamte Vorrichtung zum Garen von Lebensmitteln rotationssymmetrisch um eine Mittellängsachse M der Feuerungswanne 3 ausgebildet ist. Die Feuerungswanne 3 weist zudem an ihrem tiefsten Punkt eine Öffnung 10 auf, die dazu dient, dass sich innerhalb der Feuerungswanne 3 sammelnde Feuchtigkeit durch diese Öffnung 10 ablaufen kann.

Zum Betrieb der erfindungsgemäßen Vorrichtung zum Garen von Lebensmitteln wird innerhalb der Feuerungswanne 3 Verbrennungsmaterial in Form von Holz oder Holzkohle angeordnet und entzündet. Der zum Verbrennen des Verbrennungsmaterials notwendige Sauerstoff kann dabei zwar auch über die Öffnung 6 innerhalb der Heizplatte 5 in das Innere der Feuerungswanne 3 eintreten. Allerdings tritt der zum Verbrennen des Verbrennungsmaterials wesentliche Anteil des notwendigen Sauerstoffs zwischen dem Rand 1 der Feuerungswanne und der Heizplatte 5 in das Innere der Feuerungswanne ein. Hierbei ist insbesondere wichtig, dass Heizplatte 5 unbefestigt über dem Rand 1 der Feuerungswanne 3 aufgelegt ist, damit zwischen der Heizplatte 5 und dem Rand 1 der Feuerungswanne 3 ein Luft- beziehungsweise Gasdurchtritt möglich ist.

Erst dieser Luftdurchtritt ermöglicht einen effektiven Abbrand des Verbrennungsmaterials innerhalb der Feuerungsschale mit verbesserten Rauchwerten, da während des Verbrennens des Verbrennungsmaterials die Hitze nach oben durch die Öffnung 6 der Feuerungsplatte 5 entweicht und somit dort den Zutritt von Luft bzw. Sauerstoff, der zum Abbrand des Verbrennungsmaterials notwendig ist erschwert. Die nach oben entweichende Hitze erwärmt zudem eine Heizfläche 4 der Heizplatte 5, auf welcher dann Lebensmittel entsprechend gegart werden können.

Durch die Luft- beziehungsweise Sauerstoffzufuhr zwischen dem Rand 1 der Feuerungswanne 3 und der Heizplatte 5 ist es zudem möglich, dass sich auf der Heizfläche 4 ein Temperaturgradient ausbildet, welcher nicht nur abhängig von der Entfernung zum Verbrennungsmaterial innerhalb der Feuerungswanne 3 ist, sondern auch davon, wieviel Luft zwischen dem Rand 1 der Feuerungswanne 3 und der Heizplatte 5 in das Innere der Feuerungswanne 3 gelangt. Diese Luft dient nämlich nicht nur als Sauerstofflieferant für die Verbrennung des Verbrennungsmaterials innerhalb der Feuerungswanne 3, sondern kühlt auch noch die Heizfläche 4 der Heizplatte 5 entsprechend ab. Die Kühlung ist dabei natürlich im Außenbereich der Heizfläche 4, also im Bereich des Randes 1 der Feuerungswanne 3, größer als in deren Innenbereich im Bereich angrenzend zur Öffnung 6 der Heizplatte 5. Somit liegen aufgrund des sich durch diese Luftzufuhr ausbildenden Temperaturgradienten auf der Heizfläche 4 der Heizplatte 5 gleichzeitig unterschiedliche Temperaturzonen vor, wodurch nicht nur eine höhere Flexibilität beim Garen der Lebensmittel erreicht wird. Vielmehr können bereits fertig gegarte Lebensmittel im Außenbereich der Heizfläche 4 im Bereich des Randes 1 der Feuerungswanne nur warm gehalten werden, ohne weiter gegart zu werden. Auch können die dort zum Warmhalten abgelegten, bereits fertig gegarten Lebensmittel direkt von dort verspeist werden.

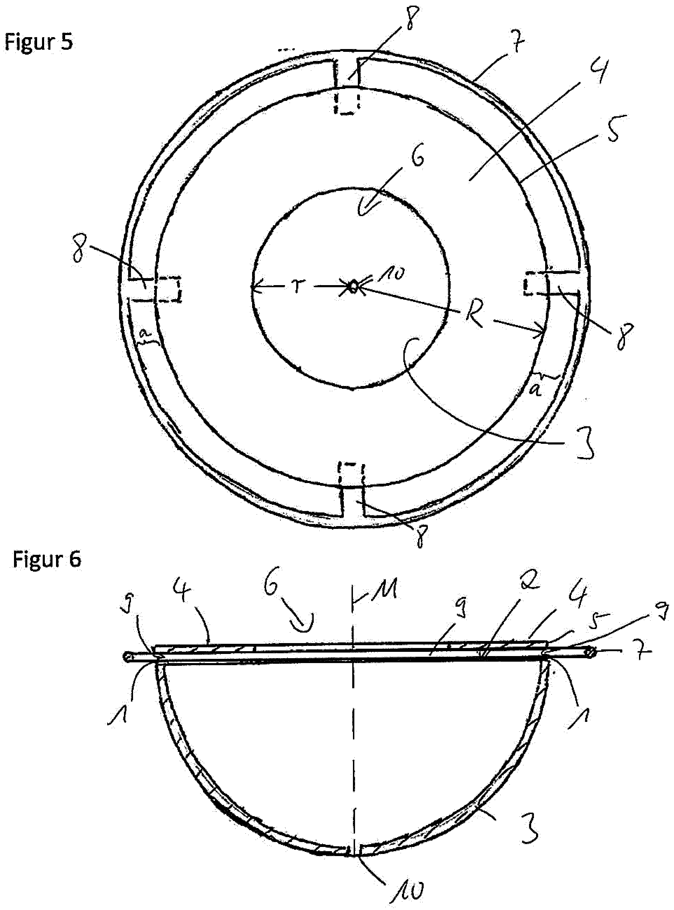

Die Figuren 4 bis 6 zeigen nunmehr entsprechend den Figuren 1 bis 3 das erste Ausführungsbeispiel einer erfindungsgemäßen Vorrichtung zum Garen von Lebensmitteln, wobei nunmehr zwischen dem Rand 1 der Feuerungswanne 3 und der Heizplatte 5 vier Auflageelemente 8 angeordnet sind, die mit einem Abstandselement 7 verbunden sind, welches die erfindungsgemäße Vorrichtung in einem vorgegebenen Abstand a kontinuierlich vollständig umläuft.

Dadurch, dass dieses Abstandselement 7 über die Auflageelemente 8 an der Vorrichtung angeordnet ist, ist zwischen der Heizplatte 5 und dem Rand 1 der Feuerungswanne 3 ein Spalt 9 gebildet, über den eine sehr definierte Luftzufuhr ins Innere der Feuerungswanne 3 möglich ist. Hierdurch ist es ermöglicht, dass der gesamte für die Verbrennung notwendige Sauerstoff über die Luftzufuhr zwischen der Heizplatte 5 und dem Rand 1 der Feuerungswanne 3 ermöglicht wird, ohne dass weiterer für die Verbrennung notwendige Sauerstoff über eine Luftzufuhr durch die Öffnung 6 innerhalb der kreisringförmigen Heizplatte 5 erfolgen muss. Die Öffnung 6 der Heizplatte 5 dient dabei nur noch dazu, dass die durch die Verbrennung des Verbrennungsmaterials innerhalb der Feuerungswanne entstandene Hitze beziehungsweise entstandenen Gase oder rauch aus der Feuerungswanne entweichen kann.

Dabei kann nunmehr auch vorgesehen sein, dass in dem Spalt 9 hier nicht dargestellte Regulierungselemente, beispielsweise in Form von Schiebeelementen angeordnet sein können, mit welchen die Luft- beziehungsweise Sauerstoffzufuhr in den Verbrennungsraum in der Feuerungswanne 23 geregelt beziehungsweise variiert werden kann. Hierdurch ist es möglich, die Verbrennung und Rauchentwicklung beim Verbrennen des Verbrennungsmaterials gezielt zu steuern.

Auch kann mithilfe derartiger Regulierungselemente der Temperaturgradient auf der Heizfläche 4 der Heizplatte 5 entsprechend gesteuert und eingestellt werden.

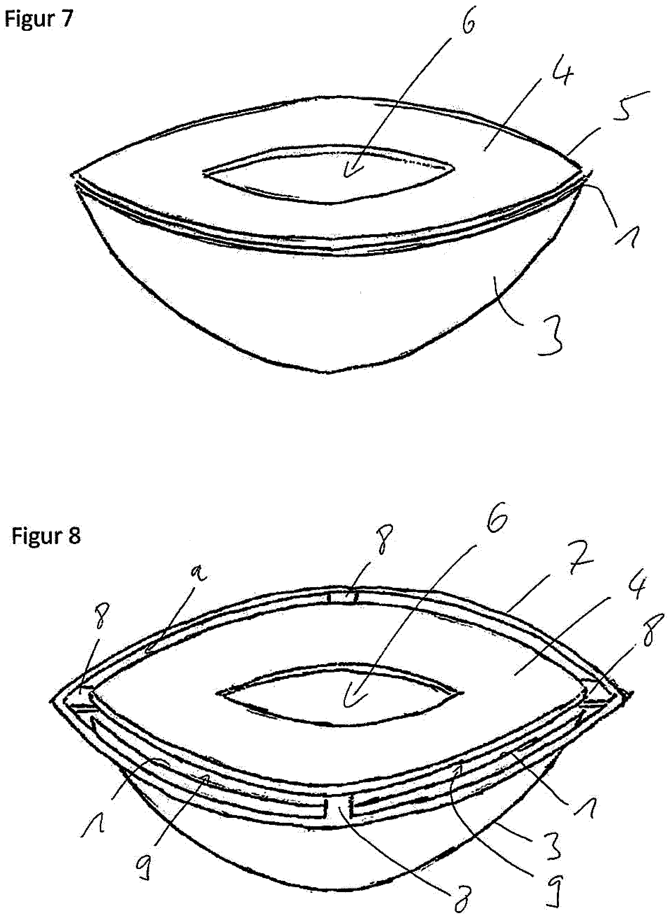

Die Figuren 7 und 8 zeigen ein weiteres Ausführungsbeispiel der erfindungsgemäßen Vorrichtung zum Garen von Lebensmitteln, wobei Figur 7 wiederum nur eine Feuerungswanne 3 der Vorrichtung zeigt. Die Form der Feuerungswane 3 ist dabei schiffförmig ausgebildet, sodass auch eine entsprechende Heizplatte 5 mit entsprechender Heizfläche 4 und entsprechender Öffnung 2 vorgesehen ist.

Während in der Figur 7 entsprechend der Darstellung des Ausführungsbeispiels der Figuren 1 bis 3 die Heizplatte 5 direkt auf den Rand 1 der Feuerungswanne 3 aufgelegt ist, ist in dem Ausführungsbeispiel gemäß Figur 8 entsprechend dem Ausführungsbeispiel der Figuren 4 bis 6 ebenfalls ein Abstandselement 7 vorgesehen, welches mittels vier Auflageelementen 8 an der Vorrichtung angeordnet ist. Auch hierbei ist zwischen der Heizplatte 5 und dem Rand 1 der Feuerungswanne 3 wiederum durch die Auflageelemente 8 ein Spalt 9 gebildet, durch welchen die Luftzufuhr ins Innere der Feuerungswanne 3 erfolgen kann. Auch hierbei kann wieder vorgesehen sein, dass Regulierungselemente, zur Regulierung der Luft- beziehungsweise Sauerstoffzufuhr ins Innere der Feuerungswanne vorgesehen sein können.

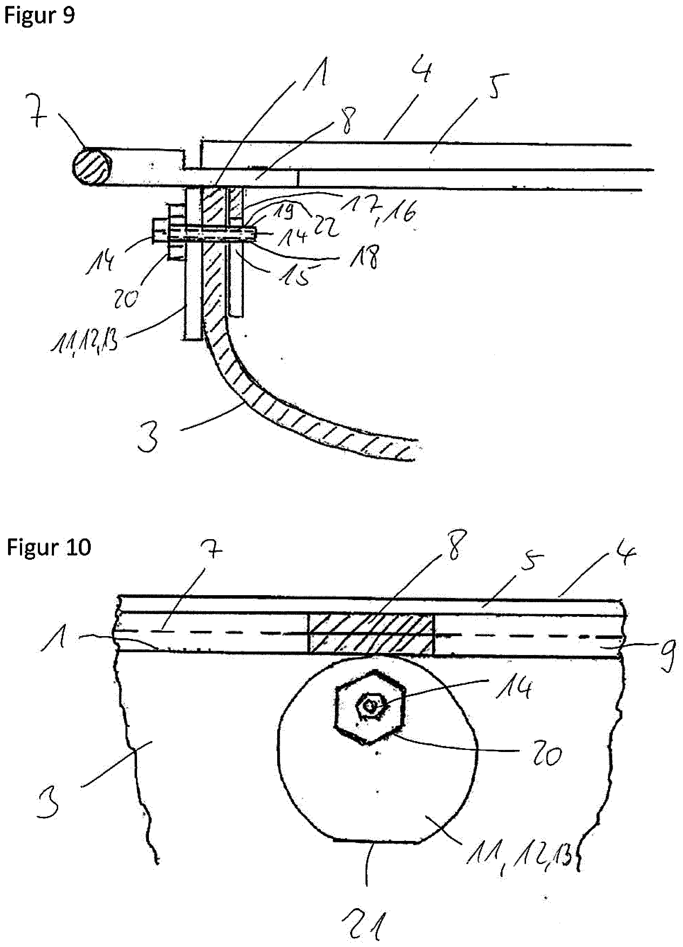

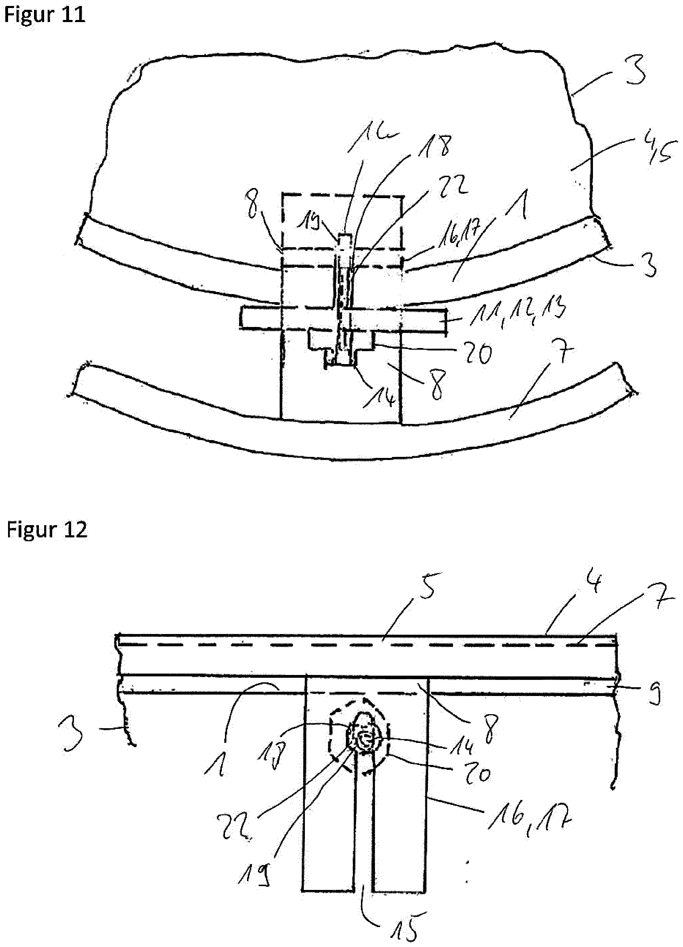

In den Figuren 9 bis 12 ist nunmehr der Bereich eines Ausführungsbeispiels einer erfindungsgemäßen Vorrichtung zum Garen von Lebensmitteln in verschiedenen Darstellungen als Schnittdarstellung, von innerhalb und außerhalb der Feuerungswanne 3 und in einer Ansicht von oben gezeigt, wobei die Heizplatte 5 auf einem Auflageelement 8 eines Abstandselementes 7 aufliegt. Durch das Auflageelement 8 ist dabei, wie insbesondere den Figuren 10 und 12 zu entnehmen ist, zwischen dem Rand 1 und der Feuerungswanne 3 und der Heizplatte 5 ein Spalt 9 gebildet.

Die Darstellungen der Figuren 9 bis 12 dienen in erster Linie dazu, ein Ausführungsbeispiel eines Verstellmechanismus zur Änderung der Größe des Spaltes 9 beispielhaft zu zeigen.

In diesem Ausführungsbeispiel ist daher ein Verstellelement 11 vorgesehen, mit dessen Hilfe die Größe des Spaltes 9 zwischen dem Rand 1 der Feuerungswanne 3 und der Heizplatte 5 variiert werden kann. Das Verstellelement 11 ist dabei als Drehelement 12 und insbesondere als Exzenterscheibe 13 ausgebildet. Diese Exzenterschraube 13 ist im vorliegenden Beispiel auf einem Bolzen 14, der mit einem Außengewinde 19 versehen ist und in ein entsprechendes Innengewinde 18 einer Bohrung 22 in der Feuerungswanne 3 eingreift, drehbar gelagert. Die Exzenterscheibe 14 ist dabei so ausgebildet, dass sie an einem Auflageelement 8 des Abstandselementes 7 angreift. Mittels eines an der Exzenterscheibe 13 angeordneten Sechskantes 20, der mit der Exzenterscheibe drehfest verbunden, insbesondere verschweißt, ist, lässt sich die Exzenterscheibe 13 verdrehen. Durch Verdrehen der Exzenterscheibe 13 wird dabei der Abstand zwischen dem Bolzen 14 und dem Auflageelement 8 des Abstandselementes 7 in seiner Größe variiert, sodass dadurch auch die Größe des Spaltes 9 zwischen dem Rand 1 der Feuerungswanne 3 und der Heizplatte 5 variierbar ist. Der Spalt 9 wird dabei gerade deshalb vergrößert, da die Heizplatte 5 auf dem Auflageelement 8 des Abstandselementes 7 aufliegt.

Damit eine Arretierung der Exzenterscheibe 13 außerhalb des minimalen Abstandes zwischen dem Bolzen 14 und dem Auflageelement 8 erfolgen kann, ist an der Exzenterscheibe 13 dazu eine Abflachung 21 vorgesehen, auf der das Auflageelement 8 in einer arretierten Position aufliegen kann. Auch wenn in diesem Ausführungsbeispiel nur eine einzige Abflachung 21 gezeigt ist, können durchaus mehrere derartige Abflachungen 21 vorgesehen sein, sodass der Spalt 9 in verschiedenen Größen variierbar und auch arretierbar ist.

Damit während des Verdrehens der Exzenterscheibe 13 sich nicht auch das Auflageelement 8 verdreht, ist es vorgesehen, dass die Aufnahmen 17 zur Fixierung des Abstandselementes 7 auf der Feuerungswanne 3 als Laschen 16 ausgebildet sind und zur Führung des Bolzens 14 mit einem Schlitz 17 versehen sind. Hierdurch ist gewährleistet, dass die Auflagenelemente 8 während des Verdrehens der Exzenterscheibe 13 durch den Bolzen 14 geführt sind und nicht von dieser herunter rutschen. Diese Ausgestaltung der als Laschen 16 ausgebildeten Aufnahmen 17 mit einem entsprechenden Schlitz 15 ist insbesondere der Darstellung der Figur 12, welche eine Ansicht vom Inneren der Feuerungswanne 3 zeigt, erkennbar. In dieser Darstellung ist der Sechskant 20 zum Verdrehen der hier nicht gezeigten Exzenterscheibe nur gestrichelt dargestellt, genauso wie das Abstandselement 7, da diese aus dem Inneren der Feuerungswanne 3 nicht sichtbar sind.

In gleicher Weise ist auch in Figur 11 das Abstandselement 8 sowie die als Lasche 16 ausgebildete Aufnahme 17 nur gestrichelt dargestellt.

In der Darstellung der Figur 10, welche eine Ansicht von außerhalb der Feuerungswanne 3 zeigt, ist aus Gründen der besseren Sichtbarkeit das Abstandselement 7 nur gestrichelt dargestellt, damit der Spalt 9 sichtbar bleibt, der durch Verdrehen des Sechskantes 20 und damit durch Verdrehen der Exzenterscheibe 13, die mit dem Sechskant 20 drehfest verbunden ist, besser sichtbar ist.

### Bezugszeichenliste

- 1: Rand
- 2: Öffnung
- 3: Feuerungswanne
- 4: Heizfläche
- 5: Heizplatte
- 6: Öffnung
- 7: Abstandselement
- 8: Auflageelement
- 9: Spalt
- 10: Öffnung
- 11: Verstellelement
- 12: Drehelement
- 13: Exzenterscheibe
- 14: Bolzen
- 15: Schlitz
- 16: Lasche
- 17: Aufnahme
- 18: Innengewinde
- 19: Außengewinde
- 20: Sechskant
- M: Mittellängsachse
- R: Außenradius
- R: Innenradius
- a: Abstand

## Patentansprüche

1. Vorrichtung zum Garen von Lebensmitteln mit
einer eine nach oben weisende und durch einen Rand (1) begrenzte Öffnung (2) aufweisende Feuerungswanne (3) und
einer über dem Rand (1) der Feuerungswanne (3) angeordneten eine Heizfläche (4) aufweisende Heizplatte (5), auf deren Heizfläche (4) Lebensmittel unmittelbar gegart werden können, wobei die Heizfläche (4) mit einer Öffnung (6) versehen ist, wobei
die Heizplatte (5) einstückig ausgebildet ist und über dem Rand (1) der Feuerungswanne (3) unbefestigt aufgelegt ist, wobei zwischen der Heizplatte (5) und dem Rand (1) der Feuerungswanne (3) ein Luft- beziehungsweise Gasdurchtritt möglich ist, **dadurch gekennzeichnet, dass** ein Abstandselement (7) vorgesehen ist, das die Feuerungswanne (3) im Bereich ihres Randes (1) in einem Abstand kontinuierlich vollständig umläuft.

2. Vorrichtung nach Anspruch 1, **dadurch gekennzeichnet, dass** die Feuerungswanne (3) in Form einer geschnittenen Kugel- oder Ellipsoidschale beziehungsweise in Form eines geschnittenen Hohlquaders ausgebildet ist.

3. Vorrichtung nach Anspruch 1 oder 2, **dadurch gekennzeichnet, dass** die Öffnung (5) der Heizplatte (5) in Form einer Kreisfläche, einer Ellipsenfläche oder eines Mehrecks, insbesondere eines Vierecks ausgebildet ist.

4. Vorrichtung nach einem der vorhergehenden Ansprüche, **dadurch gekennzeichnet, dass** die Feuerungswanne (3) und/oder die Heizplatte (5) aus einem Metall, insbesondere aus Stahl und besonders bevorzugt aus Edelstahl besteht.

5. Vorrichtung nach einem der vorhergehenden Ansprüche, **dadurch gekennzeichnet, dass** das Abstandselement (7) bevorzugt einen kreisförmigen Querschnitt aufweist und besonders bevorzugt aus einem Metall, insbesondere aus Stahl und besonders bevorzugt aus Edelstahl besteht.

6. Vorrichtung nach Anspruch 5, **dadurch gekennzeichnet, dass** an dem Abstandselement (7) wenigstens drei Auflageelemente (8) angeordnet sind, die auf dem Rand (1) der Feuerungswanne (3) ablegbar sind, wobei die Auflageelemente (8) bevorzugt Aufnahmen (17) aufweisen, mit denen sie in den Rand (1) eingreifen und das Abstandselement (7) gegenüber der Feuerungswanne (3) fixieren.

7. Vorrichtung nach Anspruch 5 oder 6, **dadurch gekennzeichnet, dass** die Heizplatte (5) auf den Auflageelementen (8) des Abstandselementes (7) unter Bildung eines Spaltes (9) zwischen der Heizplatte (5) und dem Rand (1) der Feuerungswanne (3) ablegbar ist.

8. Vorrichtung nach Anspruch 7, **dadurch gekennzeichnet, dass** in dem Spalt (9) zwischen der Heizplatte (5) und dem Rand (1) der Feuerungswanne (3) Regulierungselemente vorgesehen sind, mit welchem der Luft- beziehungsweise Gasdurchtritt durch den Spalt (9) regulierbar ist.

9. Vorrichtung nach Anspruch 7 oder 8, **dadurch gekennzeichnet, dass** Verstellelemente (11) vorgesehen sind, durch welche die Größe des Spaltes (9) variierbar ist.

10. Vorrichtung nach Anspruch 9, **dadurch gekennzeichnet, dass** die Verstellelemente (11) als Drehelemente (12) ausgebildet sind, die zumindest an drei Auflageelementen (8) des Abstandselementes (7) angreifen.

11. Vorrichtung nach Anspruch 10, **dadurch gekennzeichnet, dass** die Drehelemente (12) als Exzenterscheiben (13) ausgebildet sind, welche auf jeweils einem Bolzen (14) drehbar gelagert sind, wobei vorzugsweise der Bolzen (14) im Inneren der Feuerungswanne (3) in Schlitze (15) der als Laschen (16) ausgebildeten Aufnahmen (17) eingreift.

12. Vorrichtung nach einem der Ansprüche 9 bis 11, **dadurch gekennzeichnet, dass** die Verstellelemente (11) in wenigstens zwei Stellungen arretierbar sind.

13. Vorrichtung nach Anspruch 12, **dadurch gekennzeichnet, dass** die als Exzenterscheiben (13) ausgebildeten Verstellelemente (11) zur Arretierung in den wenigstens zwei Stellungen auf ihrem Außenumfang mit wenigstens einer Abflachung (18) versehen sind.

14. Vorrichtung nach einem der vorhergehenden Ansprüche, **dadurch gekennzeichnet, dass** im tiefsten Punkt der Feuerungswanne (3) eine Öffnung (10) vorgesehen ist.

15. Vorrichtung nach einem der vorhergehenden Ansprüche, **dadurch gekennzeichnet, dass** die Vorrichtung ein Standelement aufweist, auf dem die Feuerungswanne (3) aufsetzbar ist.

## Claims

1. Apparatus for cooking foods, having a firebox (3) having an upwardly directed opening (2) delimited by a rim (1), and a hotplate (5) which is arranged above the rim (1) of the firebox (3) and has a heating surface (4), and on the heating surface (4) of which foods can be directly cooked, wherein the heating surface (4) is provided with an opening (6), wherein the hotplate (5) is formed in one piece and is placed over the rim (1) of the firebox (3) in an unfastened manner, wherein, between the hotplate (5) and the rim (1) of the firebox (3), air admission or gas admission is possible, **characterized in that** a spacer element (7) is provided, which extends continuously around the entire firebox (3), in the region of the rim (1) thereof, at a spacing therefrom.

2. Apparatus according to Claim 1, **characterized in that** the firebox (3) is in the form of a cut-off spherical or ellipsoidal shell or in the form of a cut-off hollow cuboid.

3. Apparatus according to Claim 1 or 2, **characterized in that** the opening (5) in the hotplate (5) is in the form of a circle, an ellipse or a polygon, in particular a square.

4. Apparatus according to one of the preceding claims, **characterized in that** the firebox (3) and/or the hotplate (5) consist(s) of a metal, in particular of steel and particularly preferably of stainless steel.

5. Apparatus according to one of the preceding claims, **characterized in that** the spacer element (7) has preferably a circular cross section and consists particularly preferably of a metal, in particular of steel and particularly preferably of stainless steel.

6. Apparatus according to Claim 5, **characterized in that** at least three supporting elements (8) are arranged on the spacer element (7), which are able to be placed on the rim (1) of the firebox (3), wherein the supporting elements (8) preferably have receptacles (17) by way of which they engage with the rim (1) and fix the spacer element (7) with respect to the firebox (3).

7. Apparatus according to Claim 5 or 6, **characterized in that** the hotplate (5) is able to be placed on the supporting elements (8) of the spacer element (7), forming a gap (9) between the hotplate (5) and the rim (1) of the firebox (3).

8. Apparatus according to Claim 7, **characterized in that**, in the gap (9) between the hotplate (5) and the rim (1) of the firebox (3), regulating elements are provided, by way of which the air admission or gas admission through the gap (9) is able to be regulated.

9. Apparatus according to Claim 7 or 8, **characterized in that** adjusting elements (11) are provided, with which the size of the gap (9) is variable.

10. Apparatus according to Claim 9, **characterized in that** the adjusting elements (11) are in the form of rotary elements (12) that act at least on three supporting elements (8) of the spacer element (7).

11. Apparatus according to Claim 10, **characterized in that** the rotary elements (12) are in the form of eccentric discs (13) that are each mounted in a rotatable manner on a bolt (14), wherein preferably the bolt (14) engages, inside the firebox (3), in slots (15) in the receptacles (17), which are in the form of lugs (16).

12. Apparatus according to one of Claims 9 to 11, **characterized in that** the adjusting elements (11) are lockable in at least two positions.

13. Apparatus according to Claim 12, **characterized in that** the adjusting elements (11) in the form of eccentric discs (13) are provided, for locking in the at least two positions, with at least one flattened section (18) on their outer circumference.

14. Apparatus according to one of the preceding claims, **characterized in that** an opening (10) is provided at the deepest point of the firebox (3).

15. Apparatus according to one of the preceding claims, **characterized in that** the apparatus has a stand element, on which the firebox (3) is able to be set down.

## Revendications

1. Dispositif de cuisson d'aliments, comprenant un bac de cuisson (3) présentant une ouverture (2) orientée vers le haut et limitée par un bord (1) et une plaque chauffante (5) disposée au-dessus du bord (1) du bac de cuisson (3) et présentant une surface chauffante (4), des aliments pouvant être cuits directement sur sa surface chauffante (4), la surface chauffante (4) étant pourvue d'une ouverture (6), la plaque chauffante (5) étant réalisée d'une seule pièce et étant posée sans être fixée au-dessus du bord (1) du bac de cuisson (3), un passage d'air ou de gaz étant possible entre la plaque chauffante (5) et le bord (1) du bac de cuisson (3), **caractérisé en ce qu'**il est prévu un élément d'espacement (7) qui entoure complètement de manière continue le bac de cuisson (3) dans la région de son bord (1) à distance de celui-ci.

2. Dispositif selon la revendication 1, **caractérisé en ce que** le bac de cuisson (3) est réalisé sous la forme d'une coque sphérique ou ellipsoïde coupée, ou sous la forme d'un parallélépipède creux coupé.

3. Dispositif selon la revendication 1 ou 2, **caractérisé en ce que** l'ouverture (5) de la plaque chauffante (5) est réalisée sous la forme d'une surface circulaire, d'une surface ellipsoïde, ou d'un polygone, en particulier d'un carré.

4. Dispositif selon l'une quelconque des revendications précédentes, **caractérisé en ce que** le bac de cuisson (3) et/ou la plaque chauffante (5) se composent d'un métal, en particulier d'acier et plus préférablement d'acier inoxydable.

5. Dispositif selon l'une quelconque des revendications précédentes, **caractérisé en ce que** l'élément d'espacement (7) présente de préférence une section transversale circulaire et se compose particulièrement préférablement d'un métal, notamment d'acier et plus préférablement d'acier inoxydable.

6. Dispositif selon la revendication 5, **caractérisé en ce qu'**au moins trois éléments d'appui (8) sont disposés sur l'élément d'espacement (7), lesquels peuvent être posés sur le bord (1) du bac de cuisson (3), les éléments d'appui (8) présentant de préférence des logements (17) avec lesquels ils s'engagent dans le bord (1) et fixent l'élément d'espacement (7) par rapport au bac de cuisson (3).

7. Dispositif selon la revendication 5 ou 6, **caractérisé en ce que** la plaque chauffante (5) peut être déposée sur les éléments d'appui (8) de l'élément d'espacement (7) en formant un interstice (9) entre la plaque chauffante (5) et le bord (1) du bac de cuisson (3).

8. Dispositif selon la revendication 7, **caractérisé en ce que** des éléments de régulation sont prévus entre la plaque chauffante (5) et le bord (1) du bac de cuisson (3) dans l'interstice (9), avec lesquels le passage d'air ou de gaz à travers l'interstice (9) peut être régulé.

9. Dispositif selon la revendication 7 ou 8, **caractérisé en ce que** des éléments de réglage (11) sont prévus, lesquels permettent de faire varier la taille de l'interstice (9).

10. Dispositif selon la revendication 9, **caractérisé en ce que** les éléments de réglage (11) sont réalisés sous forme d'éléments rotatifs (12) qui s'engagent au moins au niveau de trois éléments d'appui (8) de l'élément d'espacement (7).

11. Dispositif selon la revendication 10, **caractérisé en ce que** les éléments rotatifs (12) sont réalisés sous forme de disques excentriques (13) qui sont supportés de manière rotative à chaque fois sur un boulon (14), le boulon (14) s'engageant de préférence à l'intérieur du bac de cuisson (3) dans des fentes (15) des logements (17) réalisés sous forme de pattes (16).

12. Dispositif selon l'une quelconque des revendications 9 à 11, **caractérisé en ce que** les éléments de réglage (11) peuvent être bloqués dans au moins deux positions.

13. Dispositif selon la revendication 12, **caractérisé en ce que** les éléments de réglage (11) réalisés sous forme de disques excentriques (13) sont pourvus sur leur périphérie extérieure d'au moins un méplat (18) pour le blocage dans les au moins deux positions.

14. Dispositif selon l'une quelconque des revendications précédentes, **caractérisé en ce qu'**une ouverture (10) est prévue au point le plus bas du bac de cuisson (3).

15. Dispositif selon l'une quelconque des revendications précédentes, **caractérisé en ce que** le dispositif présente un élément de support sur lequel peut être posé le bac de cuisson (3).
